# EUROPEAN PATENT APPLICATION

(11) **EP 4 714 923 A1**
(43) Date of publication of application: **25.03.2026**
(21) Application number: 25196437.5
(22) Date of filing: 18.08.2025
(51) Int. Cl.: C04B 35/80, C04B 37/00, C04B 35/628

(54) **METHOD FOR BONDING CMC FACESHEETS TO CERAMIC CORES**

(30) Priority: 23.09.2024 US 202418892753
(71) Applicant: General Electric Company, Cincinnati, Ohio 45215 (US)
(72) Inventor: DUNN, Daniel Gene, Guilderland, 12084 (US); SARRAFI-NOUR, Reza, Niskayuna, 12309 (US); WEAVER, Jared Hogg, Niskayuna, 12309 (US); SCHAEFFER, Albert Jason, Newark, 19713 (US); COSTAKIS, William James, Niskayuna, 12309 (US)
(74) Representative: Openshaw & Co.

(57) **Abstract**

A method for forming a ceramic matrix composite ("CMC") component includes applying a CMC fiber preform to a ceramic core where the CMC fiber preform is formed from a plurality of CMC fiber tows. An interface coating is formed on at least a portion of the plurality of CMC fiber tows before or after the CMC fiber preform is formed from the plurality of CMC fiber tows. A ceramic matrix is formed on the CMC fiber preform with the CMC fiber preform applied to the ceramic core. The CMC fiber preform and the ceramic matrix form a CMC facesheet. A reaction material is located at or adjacent an interface of the CMC facesheet and the ceramic core. The CMC facesheet and the ceramic core are thermally processed to react the interface coating with the reaction material to form a bonding layer at the interface.

## Description

### FIELD

The present subject matter relates generally to a method for bonding ceramic matrix composite facesheets to ceramic cores.

### BACKGROUND

Reinforced ceramic matrix composites ("CMCs") comprising fibers dispersed in continuous ceramic matrices of the same or a different composition are well suited for structural applications because of their toughness, thermal resistance, high-temperature strength, and chemical stability. Such composites typically have high strength-to-weight ratio that renders them attractive in applications in which weight is a concern, such as in aeronautic applications. Their stability at high temperatures renders them very suitable in applications in which the components are in contact with a high-temperature gas, such as in gas turbine engine. Composite panels with internal cellular structures such as honeycomb or similar configuration of cells can provide for similar properties while reducing weight of the component.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures.
FIGS. 1A-1E are schematic, side views of various stages of forming an exemplary ceramic composite component in accordance with an embodiment of the present disclosure.
FIGS. 2A-2E are schematic, side views of various stages of forming an exemplary ceramic composite component in accordance with another embodiment of the present disclosure.
FIGS. 3A-3F are schematic, side views of various stages of forming an exemplary ceramic composite component in accordance with another embodiment of the present disclosure.
FIG. 4A is a schematic, side view of an exemplary ceramic core in accordance with an embodiment of the present disclosure.
FIG. 4B is a schematic, side view of another exemplary ceramic composite component formed with the ceramic core depicted in FIG. 4A in accordance with an embodiment of the present disclosure.
FIG. 5 is a schematic, enlarged side view of a portion of the exemplary ceramic composite component of FIG. 4 in accordance with another embodiment of the present disclosure.
FIG. 6 is a schematic, enlarged side view of a portion of the exemplary ceramic composite component of FIG. 4 in accordance with another embodiment of the present disclosure.
FIG. 7 is a schematic, side view of another exemplary ceramic composite component formed in accordance with an embodiment of the present disclosure.
FIG. 8 is a flow diagram depicting an embodiment of a method of forming a ceramic composite component in accordance with various aspects of the present disclosure
FIG. 9 is a flow diagram depicting an embodiment of a method of forming a ceramic composite component in accordance with various aspects of the present disclosure.
FIG. 10 is a flow diagram depicting an embodiment of a method of forming a ceramic composite component in accordance with various aspects of the present disclosure.
FIG. 11 is a flow diagram depicting an embodiment of a method of forming a ceramic composite component in accordance with various aspects of the present disclosure.
FIG. 12 is a flow diagram depicting an embodiment of a method of forming a ceramic composite component in accordance with various aspects of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

In the present disclosure, when a layer is being described as "above one another," "on," or "over" another layer or substrate, it is to be understood that the layers can be directly contacting each other. Thus, these terms are simply describing the relative position of the layers to each other and do not necessarily mean "on top of" since the relative position above or below depends upon the orientation of the device to the viewer.

As used herein a "monolithic" ceramic refers to a ceramic material that does not contain any reinforcement fibers.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth.

As used herein, ceramic-matrix-composite or "CMC" refers to a class of materials that include a reinforcing material (e.g., reinforcing fibers) surrounded by a ceramic matrix phase. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers of CMCs can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof. Those fibers can be continuous fibers or short fibers like whiskers and chopped fibers.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃ 2SiO₂), as well as glassy aluminosilicates.

In certain embodiments, the reinforcing fibers may be bundled and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, such as a cure or pyrolysis/burn-out to yield a high char residue in the preform, and subsequent chemical processing, such as melt-infiltration with, for example, silicon or a silicon alloy, to arrive at a component formed of a CMC material having a desired chemical composition. Chemical vapor infiltration (CVI) may also be used to fabricate the preform such that a gaseous source of silicon, silicon carbide, or a silicon alloy is used to infiltrate pores of the cured preform to arrive at a component formed of a CMC material having a desired chemical composition. Other methods may also be used to form the preform component such as, by way of non-limiting example, polymer infiltration and pyrolysis (PIP).

In exemplary embodiments, the present disclosure includes composite panels or components having a plurality of "internal structures" such as hollow cells, channels, struts, lattice structures, cavities and other structural and/or functional elements. While ceramic composite materials provide good toughness, high thermal insulation, high-temperature strength, and chemical stability in a broad range of operating environments, the raw material and processing techniques can become expensive. Current structures capable of withstanding extreme operation conditions may be bulky, expensive, or have short lifespans. Accordingly, lighter, stronger, and more cost-effective structures are highly desirable in the art and can enable a broader range of applications. Composite panels with internal cellular structures such as foam, honeycomb, or similar configurations of cells can provide for similar properties while reducing weight of the component, and notably, the amount of CMC material used in the component. A honeycomb cellular structure could include any type of structure such as, by way of non-limiting example, hexagonal honeycombs, triangular honeycombs, square honeycombs, or any combination of such shapes, and may include any uniform or non-uniform shape. However, the relatively thin walls of the core structure provide limited bonding area to connect the core structure with one or more facesheets. A composite panel may include a cellular structure located between two spaced apart facesheets. A facesheet may include one or more plies of fabric or fiber reinforcing material such as, by way of non-limiting example, CMC plies, that are set or cured to provide sufficient strength and stiffness to the composite panel. The facesheets are generally thin, at least when compared to the cellular structure, but are higher in density than the cellular structure. The internal structures may comprise ceramic components or structures (e.g., a ceramic core including a solid ceramic core or a ceramic core including a cellular structure, such as a foam or honeycomb structure) that, in combination with CMC plies, may form a CMC sandwich component. A CMC sandwich component is also particularly suitable for higher temperature applications. A CMC sandwich component may comprise a monolithic ceramic core between oppositely disposed CMC facesheets. The ceramic core materials are also lightweight compared to superalloys, yet can still provide strength and durability to the component made therefrom. Therefore, such materials are usable for many high temperature structures and components of high temperature sections of gas turbine engines, rocket engines, and spacecraft. Examples of such components include airfoils (e.g., turbine blades and vanes), combustors, shrouds and other like components, nozzles, transition ducts, thermal protection systems (TPS), and aerodynamic control surfaces and leading edges. The application of such components would benefit from the lighter-weight and higher temperature capability these materials can offer.

As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Binder Jet technology, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, and other additive manufacturing technologies that utilize an energy beam or other energy source to solidify an additive manufacturing material such as a powder material. In fact, any suitable additive manufacturing modality may be utilized with the presently disclosed subject matter.

Additive manufacturing technology may generally be described as fabrication of objects by building point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, or precursors for ultra-high-temperature ceramics, such as polymeric precursors. Each successive layer may be, for example, between about 10 µm and 200 µm, although the thickness may be determined based on any number of parameters and may be any suitable size.

Embodiments of the present disclosure provide a CMC sandwich structure suitable for high-temperature, high-specific-stiffness, applications. High-temperature CMC layers are laminated to or formed onto a ceramic core structure to form the CMC sandwich structure component. The ceramic core structure may be printed or machined or fabricated by other known means. In exemplary embodiments, the present disclosure provides a method for forming a CMC component that creates a strong bond between the CMC layers and the ceramic core despite the CMC fibers of the CMC layers having a relatively weak interface coating. For example, the CMC layer typically has an interface coating, sometimes referred to as an interphase coating, formed on the fibers of the CMC layer so as to optimize bonding between the fibers and a ceramic matrix surrounding the fibers (i.e., so as to have bonding that is strong enough to transfer to the fiber reinforcement the mechanical stresses to which the material is subjected, but bonding that is not too strong so as to avoid making the material brittle). Thus, when bonding the CMC layer to the core structure, the interface coating may impede or interfere with forming a strong bond between the CMC layer and the core structure. In exemplary embodiments, the method includes using excess silicon from the ceramic core or additional silicon or reactive constituents such as intermetallic silicides and borides located at the interface of the ceramic core and the CMC layer to create a strong silicon carbide (SiC) or other reaction bonding layer bridges to bond the CMC layer to the ceramic core. In exemplary embodiments, the excess silicon reacts with the interface coating deposited onto the CMC fibers to create bridges, such as SiC bridges, between the CMC layer and the ceramic core.

Additionally, embodiments of the present disclosure provide a method for securing the CMC layers to the ceramic core using one or more interlocking elements formed on or in the ceramic core. In exemplary embodiments, the ceramic core is fabricated to include one or more interlocking elements that mechanically engage or interlock with at least a portion of the CMC layer. In exemplary embodiments, the CMC layer may be formed onto the interlocking elements or have one or more of the CMC fibers of the CMC layers woven into the interlocking elements. Thus, despite having a relatively weak interface coating present on the CMC fibers of the CMC layer, embodiments of the present disclosure securely bond the CMC layer to the ceramic core.

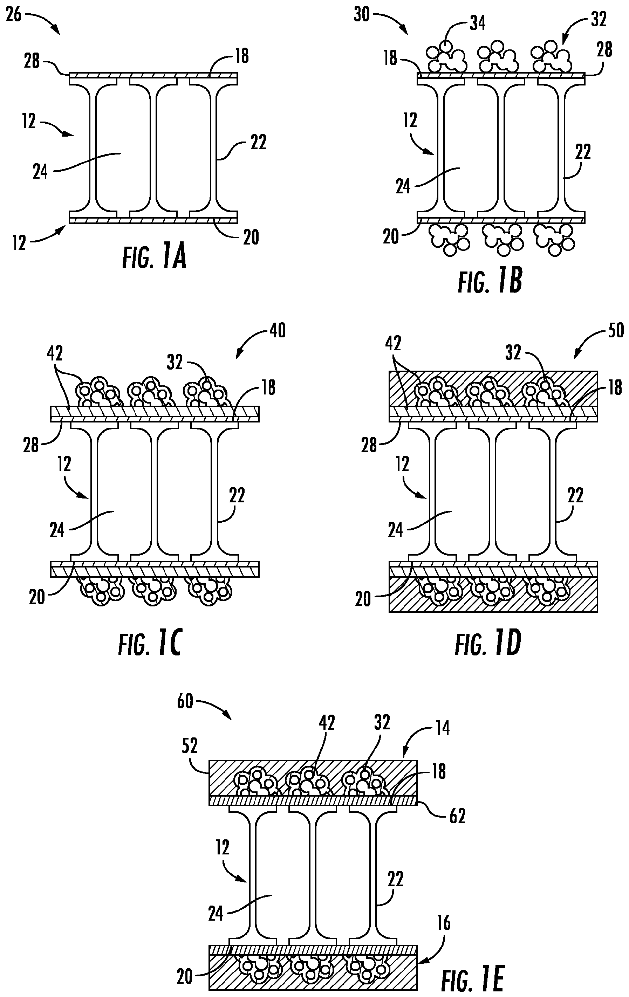

Referring now to the drawings, wherein identical numerals indicate the same elements throughout the figures, FIGS. 1A-1E are schematic diagrams depicting different stages of a method for forming a CMC component 10 in accordance with an embodiment of the present disclosure. In the illustrated embodiment, at least a portion of the CMC component 10 is a CMC sandwich structure in the form of a ceramic core 12 sandwiched or disposed between a pair of CMC facesheets 14 and 16. In other words, the CMC component 10 includes the ceramic core 12 with a layup or stacked arrangement of one or more CMC plies forming each of the CMC facesheets 14 and 16. Thus, the CMC component 10 is a layered or sandwich structure formed by bonding two CMC facesheets 14 and 16 to the ceramic core 12.

In exemplary embodiments, the ceramic core 12 comprises a monolithic ceramic fabricated using additive manufacturing techniques. However, it should also be understood that the ceramic core 12 may be fabricated using other techniques such as, but not limited to, casting, pressing, extrusion, injection molding, or a combination thereof, or any other well-known ceramic processing techniques. The ceramic core 12 may comprise a solid monolithic ceramic or a monolithic cellular structure. A cellular structure includes, by way of non-limiting examples, a honeycomb structure, a foam structure, a lattice structure, a corrugated structure and other types of lightweight core structures. The ceramic core 12 may also be a CMC core. In FIG. 1A, the ceramic core 12 comprises a surface 18, a surface 20 opposite and spaced apart from the surface 18, and one or more sidewalls 22 extending between the surfaces 18 and 20. The one or more sidewalls 22 define one or more cells 24 between respective sidewalls 22 extending between, or substantially between, the surface 18 and the surface 20 of the ceramic core 12. For ease of description, the formation or bonding of the CMC facesheet 14 to the surface 18 of the ceramic core 12 will be described in connection with FIGS. 1A-1E; however, it should be understood that the CMC facesheet 16 may be similarly formed and bonded to the surface 20 of the ceramic core 12 or for wrapping the CMC facesheet 14 around or over different surfaces of the ceramic core 12, such as a teardrop-shaped airfoil. It should also be understood that the CMC component 10 may comprise only a single CMC facesheet formed and bonded to the ceramic core 12 according to the present disclosure (e.g., only the CMC facesheet 14) while another CMC facesheet or other structure may be bonded or secured to an opposite side of the ceramic core 12. It should also be understood that the present disclosure may be used to form or bond other types of CMC structures to the ceramic core 12 at other locations of the ceramic core 12 (e.g., to one or more of the sidewalls 22).

In exemplary embodiments, the ceramic core 12 is densified prior to the formation and bonding of the CMC facesheet 14 to the ceramic core 12. Examples of densification processes include melt-infiltration, polymer impregnation and pyrolysis (PIP), chemical vapor infiltration (CVI) or combinations of such processes. In some embodiments the melt-infiltrant metal or alloy reacts with some reactive fillers that have been introduced in the material before the melt-infiltration step. An example of reactive fillers are carbon powders or carbon char that subsequently react with the infiltrant alloy, like a silicon-based alloy or intermetallic silicide phase, to form silicon carbide.

FIG. 1A depicts an initial stage 26 of forming and bonding the CMC facesheet 14 to the surface 18 of the ceramic core 12. At the stage 26, reactive materials (e.g., in the form of a reaction layer 28) may be applied to the surface 18 of the ceramic core 12. In exemplary embodiments, the reaction layer 28 may comprise only silicon-based reactive materials such as, by way of non-limiting example, elemental silicon, a silicon-containing compound, or an intermetallic silicide." OR "the reaction layer 28 may comprise silicon in the form of elemental silicon, a silicon-containing compound, or an intermetallic silicide compound. As will be described in further detail below, the materials of the reaction layer 28 will react with constituent components of an interface coating formed on or applied to CMC fibers forming the CMC facesheet 14 (FIG. 1E) to bond the CMC facesheet 14 (FIG. 1E) to the ceramic core 12. It should also be understood that the stage 26 may be considered an optional stage (i.e., the stage 26 may be omitted) when a sufficient amount of reactive material is present in the ceramic core 12 or on the surface 18 of the ceramic core 12 without the reaction layer 28 such as, by way of non-limiting example, excess silicon present within the ceramic core 12 or on the surface 18 of the ceramic core 12. The excess silicon present within the ceramic core 12 or on the surface 18 of the ceramic core 12 may be from one or more of densification, infiltration, or other processes performed on the ceramic core 12 in the ordinary course of forming the ceramic core 12 or as an additional separate silicon-adding process.

FIG. 1B depicts a stage 30 of forming and bonding the CMC facesheet 14 to the surface 18 of the ceramic core 12 subsequent to the stage 26. At the stage 30, a CMC fiber preform 32 is applied to the surface 18 of the ceramic core 12 and, if the stage 26 is used, onto the reaction layer 28. The CMC fiber preform 32 may include one or more plies of unidirectional CMC fiber tows 34 (e.g., in the form of one or more CMC filaments or fibers) or the CMC fiber tows 34 may be woven or braided to form a CMC fabric or woven material that are cut to a desired size or shape and laid up on the surface 18 of the ceramic core 12. The CMC fiber preform 32 may be consolidated or compacted prior to or after being applied to the surface 18 of the ceramic core 12. The consolidation or compaction of the CMC fiber preform 32 may be done by applying heat, vacuum and/or, in some cases, pressure as in an autoclave.

FIG. 1C depicts a stage 40 for forming and bonding the CMC facesheet 14 to the surface 18 of the ceramic core 12 subsequent to the stage 30. At the stage 40, an interface coating 42 is formed on or applied to at least the CMC fiber preform 32. The interface coating 42 is an interphase coating formed on or applied to the fibers of the fiber preform 32 to optimize bonding between the fibers and a ceramic matrix surrounding the fibers (i.e., to have bonding that is strong enough to transfer the mechanical stresses to which the material is subjected to the fiber reinforcement, but bonding that is not too strong to avoid making the material fragile). In exemplary embodiments, the interface coating 42 may be carbon (C) (e.g., pyrolytic carbon (PyC)) forming a carbon interface coating or boron nitride (BN) forming a boron nitride interface coating. The interface coating 42 may be formed on or applied to the CMC fiber preform 32 by one or more CVI processes, solution deposition, or other methods. Although not explicitly depicted in FIG. 1C, at the stage 40, the interface coating 42 may also extend beyond the CMC fiber preform 32 and reside on or penetrate portions of the ceramic core 12, including the surface 18 of the ceramic core 12, such as, by way of non-limiting example, in the absence of the reaction layer 28 if the stage 26 (FIG. 1A) is omitted. Additionally or alternatively, the interface coating 42 may mingle or combine with at least a portion of the reaction layer 28. As will be described further below, embodiments of the present disclosure increase the bonding strength of the CMC facesheet 14 to the ceramic core 12 despite the application or presence of the interface coating 42 at the interface of the CMC facesheet 14 with the ceramic core 12.

FIG. 1D depicts a stage 50 of forming and bonding the CMC facesheet 14 to the surface 18 of the ceramic core 12 subsequent to the stage 40. At the stage 50, a ceramic matrix 52 is formed on or applied to the CMC fiber preform 32 to embed or surround the fibers or the CMC fiber tows 34 of the CMC fiber preform 32 and bond the fibers or the CMC fiber tows 34 of the CMC preform 32 together (i.e., after application of the interface coating 42). The CMC fiber preform 32 and the ceramic matrix 52 together form the CMC facesheet 14. The ceramic matrix 52 may be formed on or applied to the CMC fiber preform 32 by one or more CVI processes, PIP processes, or other type or process.

FIG. 1E depicts a stage 60 of forming and bonding the CMC facesheet 14 to the surface 18 of the ceramic core 12 subsequent to the stage 50. At the stage 60, the ceramic core 12 and the CMC facesheet undergo a thermal process to react the interface coating 42 with one or more reactive materials at the interface of the ceramic core 12 with the CMC facesheet 14 to form a bonding layer 62 at the interface of the ceramic core 12 with the CMC facesheet 14. In exemplary embodiments, the bonding layer 62 may be formed by reacting the interface coating 42 with materials of the reaction layer 28 (FIGS. 1A-1D). Additionally or alternatively, such as by way of non-limiting example, if the reaction layer 28 is omitted, the bonding layer 62 may be formed by reacting the interface coating 42 with other reactive materials located at or near the interface the of the ceramic core 12 with the CMC facesheet 14. As an example, and not by way of limitation, the ceramic core 12 may comprise excess or additional silicon that reacts with the constituent components of the interface coating 42, such as carbon, to form a silicon carbide (SiC) bonding layer. The excess or additional silicon present in the ceramic core 12 to react with the interface coating 42 may result from silicon infiltration of the ceramic core 12 before the CMC fiber preform 32 is applied to the ceramic core 12.

In exemplary embodiments, the ceramic core 12 and the CMC facesheet 14 together are heated to a reaction temperature, such as a temperature equal to or greater than a melting temperature of the reactive material such as the reactive material of the reaction layer 28 or the melting temperature of silicon when silicon is the reactive material (e.g., silicon within the reaction layer 28 or excess silicon from the ceramic core 12 if the reaction layer 28 is omitted). For example, in exemplary embodiments, the thermal processing of the ceramic core 12 and the CMC facesheet 14 includes heating the ceramic core 12 and the CMC facesheet 14 together to at least 1400° Celsius. The heating of the ceramic core 12 and the CMC facesheet 14 together causes the materials in the reaction layer 28 at the interface of the ceramic core 12 with the CMC facesheet 14 to react with and consume at least a portion of the constituent component of the interface coating 42 that has deposited at the junction between the ceramic core 12 and the CMC facesheet 14 to form a strong reaction product such as, by way of non-limiting example, SiC or Si₃N₄ bridges in the bonding layer 62 to bond the CMC facesheet 14 to the ceramic core 12. In exemplary embodiments, such as by way of non-limiting example, if the reaction layer 28 is omitted, silicon in the ceramic core 12 reacts with and consume at least a portion of the constituent component of the interface coating 42 to form the bonding layer 62. The silicon in the ceramic core 12 may reside at or near the surface 18 of the ceramic core 12 or may reside elsewhere in the ceramic core 12 and be drawn toward the interface of the ceramic core 12 with the CMC facesheet 14.

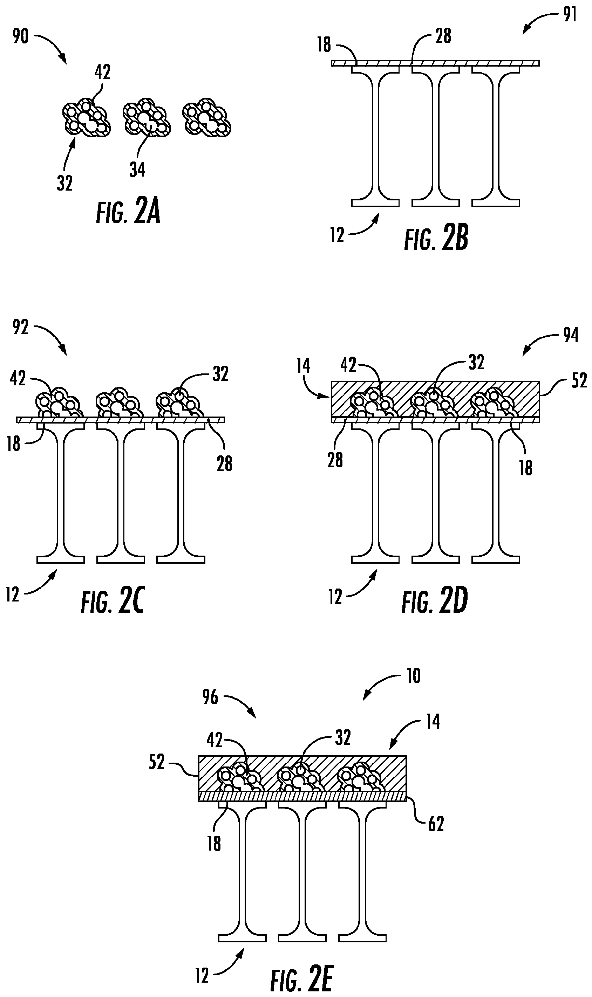

FIGS. 2A-2E are schematic diagrams illustrating another method for forming the CMC component 10 in accordance with an embodiment of the present disclosure. For ease of description, the formation or bonding of the CMC facesheet 14 to the surface 18 of the ceramic core 12 will be described in connection with FIGS. 2A-2E; however, it should be understood that the CMC facesheet 16 (FIG. 1E) may be similarly formed and bonded to the surface 20 (FIGS. 1A-1E) of the ceramic core 12 or for wrapping the CMC facesheet 14 around or over different surfaces of the ceramic core 12, such as a teardrop-shaped airfoil. In FIG. 2A, at a stage 90 of the method, the CMC fiber preform 32 undergoes one or more processes such as, by way of non-limiting example, one or more CVI or other processes, to form, apply, or deposit onto the CMC fiber preform 32 the interface coating 42 prior to the CMC fiber preform 32 being applied to the surface 18 of the ceramic core 12. FIG. 2B depicts a stage 91 of forming and bonding the CMC facesheet 14 to the surface 18 of the ceramic core 12 subsequent to the stage 90. At the stage 91, reactive materials (e.g., in the form of the reaction layer 28) may be applied to the surface 18 of the ceramic core 12 (i.e., prior to the application of the CMC fiber preform 32 to the surface 18 of the ceramic core 12). As described above in connection with the stage 26 (FIG. 1A), it should be understood that the stage 91 is optional such that the reaction layer 28 may be omitted such as, by way of non-limiting example, sufficient reactive materials are present or may be drawn to the interface of the ceramic core 12 with the CMC facesheet 14, such as excess silicon present within the ceramic core 12.

FIG. 2C depicts a stage 92 of forming and bonding the CMC facesheet 14 to the surface 18 of the ceramic core 12 subsequent to the stage 90. At the stage 92, the CMC fiber preform 32 containing the interface coating 42 is applied to the surface 18 of the ceramic core 12 and, if present, to the reaction layer 28. In exemplary embodiments, a tool may be used (not shown) to hold the CMC fiber preform 32 onto the ceramic core 12. Stage 92 further shows the reaction layer 28 between the CMC fiber preform 32 and the ceramic core 12. However, in embodiments where excess or additional reactive material is present in the ceramic core 12, the CMC fiber preform 32 may be in direct contact with the ceramic core 12 without the reaction layer 28. FIG. 2D depicts a stage 94 of forming and bonding the CMC facesheet 14 to the surface 18 of the ceramic core 12 subsequent to the stage 92. At the stage 94 the CMC fiber preform 32 with the interface coating 42 and the ceramic core 12 undergo one or more processes, such as by way of non-limiting example, one or more CVI or other processes, to form or apply the ceramic matrix 52 onto the CMC fiber preform 32 such that the CMC fiber preform 32 and the ceramic matrix 52 together form the CMC facesheet 14. Upon completion of the stage 94, any tool used to hold the CMC fiber preform 32 onto the ceramic core 12 during the application or formation of the ceramic matrix 52 may be removed.

FIG. 2E depicts a stage 96 of forming and bonding the CMC facesheet 14 to the surface 18 of the ceramic core 12 subsequent to the stage 94. At the stage 96, the ceramic core 12 and the CMC facesheet 14 together undergo a thermal process, similar to the stage 60 of FIG. 1E, to react the interface coating 42 with reactive materials to form the bonding layer 62 at the interface of the ceramic core 12 with the CMC facesheet 14. As described above, in exemplary embodiments, the reactive materials of the reaction layer 28 react with the constituent components of the interface coating 42 to form the bonding layer 62. Additionally or alternatively, the ceramic core 12 may comprise excess or additional silicon that reacts with the constituent components of the interface coating 42 to form the bonding layer 62, such as a SiC bonding layer. The additional silicon present in the ceramic core 12 may result from silicon infiltration of the ceramic core 12 before the CMC fiber preform 32 is applied to the ceramic core 12.

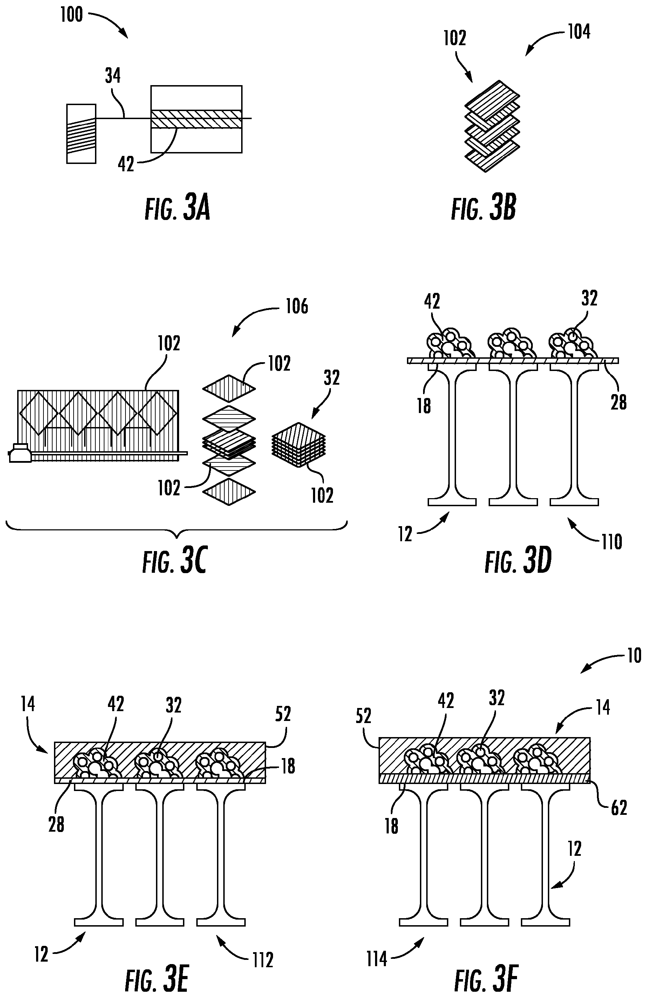

FIGS. 3A-3F are schematic diagrams illustrating another method for forming the CMC component 10 in accordance with an embodiment of the present disclosure. For ease of description, the formation or bonding of the CMC facesheet 14 to the surface 18 of the ceramic core 12 will be described in connection with FIGS. 3A-3F; however, it should be understood that the CMC facesheet 16 (FIG. 1E) may be similarly formed and bonded to the surface 20 (FIGS. 1A-1E) of the ceramic core 12 or for wrapping the CMC facesheet 14 around or over different surfaces of the ceramic core 12, such as a teardrop-shaped airfoil. In FIG. 3A, at a stage 100, the CMC fiber tows 34 undergo one or more CVI or other processes to form, apply, or deposit the interface coating 42 onto the CMC fiber tows 34 prior to the CMC fiber tows 34 being woven, braided, prepregged, or otherwise processed into one or more CMC plies 102. Applying the interface coating 42 onto the CMC fiber tows 34 prior to forming the CMC fiber preform 32 allows for the SiC core to function as the tooling for a CVI or other process, reducing an overall tooling cost. FIG. 3B depicts a stage 104 of forming and bonding the CMC facesheet 14 to the surface 18 of the ceramic core 12 subsequent to the stage 100. At the stage 104, one or more of the CMC fiber tows 34 coated with the interface coating 42 are woven, braided, or otherwise processed into one or more of the CMC plies 102. FIG. 3C depicts a stage 106 of forming and bonding the CMC facesheet 14 to the surface 18 of the ceramic core 12 subsequent to the stage 104. At the stage 106, one or more of the CMC plies 102 containing the interface coating 42 are cut to a desired shape or size, and for two or more CMC plies 102, the CMC plies 102 are oriented in desired directions with respect to each other to provide a desired strength or structural characteristic and combined or laid up to form the CMC fiber preform 32 containing the interface coating 42. As described above, consolidation or compaction of the CMC plies 102 forming the CMC fiber preform 32 may be done by applying heat, vacuum and/or, in some cases, pressure as in an autoclave, before or after being applied to the surface 18 of the ceramic core 12. It should be understood that the stage 106 may be performed as a number of different sub-processes.

FIGS. 3D-3E depict respective sequential stages 110, 112, and 114 subsequent to the stage 106 of forming and bonding the CMC facesheet 14 to the surface 18 of the ceramic core 12. Stages 110, 112, and 114 are the same or similar to the respective stages 92, 94, and 96 of FIGS. 2C-2E such that the CMC fiber preform 32 containing the interface coating 42 is applied to the surface 18 of the ceramic core 12 at the stage 110, one or more CVI or other processes are performed to the ceramic core 12 and the CMC fiber preform 32 containing the interface coating 42 at the stage 112 to form, apply or deposit the ceramic matrix 52 onto the CMC fiber preform 32 to form the CMC facesheet 14, and then the CMC facesheet 14 and the ceramic core 12 are together thermally processed at the stage 114 to react the interface coating 42 with silicon or other reactive materials to form the bonding layer 62 at the interface of the ceramic core 12 with the CMC facesheet 14. Although not depicted in FIGS. 3D-3F, as described above in connection with FIGS. 1A-1E and 2A-2E, the reaction layer 28 may also be applied to the surface 18 of the ceramic core 12, or to the CMC fiber preform 32 (e.g., prior to the CMC fiber preform 32 being applied to the surface 18 of the ceramic core 12), to provide additional silicon, silicon-containing compounds or other reactive compounds at the interface of the CMC facesheet 14 with the surface 18 of the ceramic core 12 for interacting with the interface coating 42 to form the bonding layer 62. Additionally or alternatively, excess silicon at or near the surface 18 of the ceramic core 12 or excess silicon from other locations of the ceramic core 12 that may be drawn to the interface of the ceramic core 12 with the CMC facesheet 14 may also react with the interface coating 42 to form the bonding layer 62.

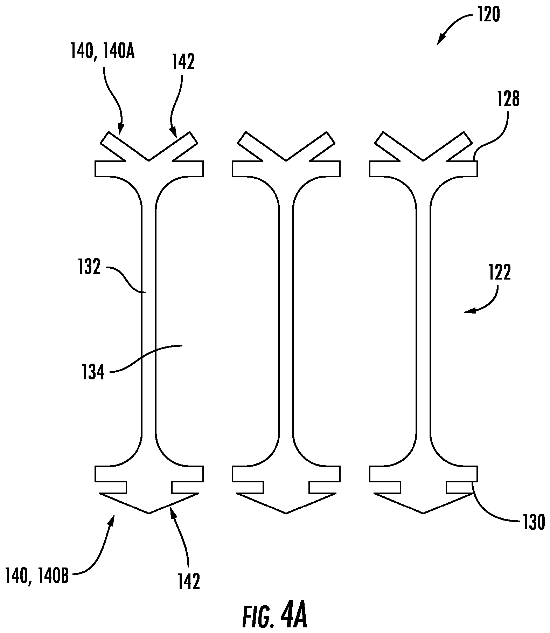

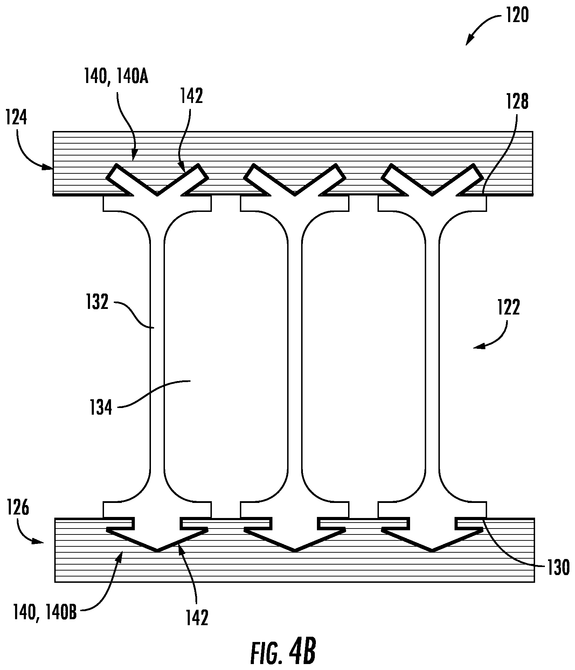

FIG. 4A is a schematic diagram depicting a ceramic core 122 in accordance with an embodiment of the present disclosure, and FIG. 4B is a schematic diagram depicting the ceramic core 122 incorporated into a CMC component 120 in accordance with an embodiment of the present disclosure. The CMC component 120 may be similar to the CMC component 10 (FIGS. 1A-1E, 2A-2E, and 3A-3F) such that the CMC component 120 is a CMC sandwich structure in the form of the ceramic core 122 sandwiched or disposed between a pair of CMC facesheets 124 and 126. In other words, the CMC component 120 includes the ceramic core 122 with a layup or stacked arrangement of one or more CMC plies forming each of the CMC facesheets 124 and 126. Thus, the CMC component 120 is a layered structure formed by bonding or securing the CMC facesheets 124 and 126 to the ceramic core 122.

Referring to FIG. 4A, the ceramic core 122 may be formed similar to the ceramic core 12 (FIGS. 1A-1E, 2A-2E, and 3A-3F) such that the ceramic core 122 is formed of a ceramic material, such as a monolithic ceramic core, and can be a solid ceramic core or a cellular ceramic core. In exemplary embodiments, the ceramic core 122 is fabricated using additive manufacturing techniques. However, it should also be understood that the ceramic core 122 may be fabricated using other techniques such as, but not limited to, casting, pressing, extrusion, injection molding, or a combination thereof, or any other known ceramic processing methods. In FIG. 4A, the ceramic core 122 comprises a surface 128, a surface 130 opposite and spaced apart from the surface 128, and one or more sidewalls 132 extending between the surfaces 128 and 130. The one or more sidewalls 132 define one or more cells 134 between respective sidewalls 132 extending between, or substantially between, the surface 128 and the surface 130 of the ceramic core 122. In exemplary embodiments, the ceramic core 122 is densified prior to the formation, bonding or securing of the CMC facesheets 124 and 126 (FIG. 4B) to the ceramic core 122.

In exemplary embodiments, the ceramic core 122 is formed to include one or more interlocking elements 140 configured to mechanically engage the respective CMC facesheets 124 and 126 (FIG. 4B) to secure the respective CMC facesheets 124 and 126 (FIG. 4B) to the ceramic core 122. In the illustrated embodiment, one or more interlocking elements 140A are positioned on the surface 128 of the ceramic core 122, and one or more interlocking elements 140B are positioned on the surface 130 of the ceramic core 122. Thus, in exemplary embodiments, the one or more interlocking elements 140A are configured to secure the CMC facesheet 124 (FIG. 4B) to the ceramic core 122, and the one or more interlocking elements 140B are configured to secure the CMC facesheet 126 (FIG. 4B) to the ceramic core 122. In exemplary embodiments, each interlocking element 140 defines one or more protrusions 142 extending from the respective surface 128 or the surface 130 of the ceramic core 122 in a direction toward the respective CMC facesheet 124 or 126 (FIG. 4B) to mechanically engage or interlock with the respective CMC facesheet 124 or 126 (FIG. 4B). For example, the one or more protrusions 142 are configured to extend away from the respective surface 128 or surface 130 of the ceramic core 122 such that the one or more protrusions 142 extend into at least a portion of the respective CMC facesheet 124 or 126 (FIG. 4B) to mechanically engage or interlock with the respective CMC facesheet 124 and 126 (FIG. 4B).

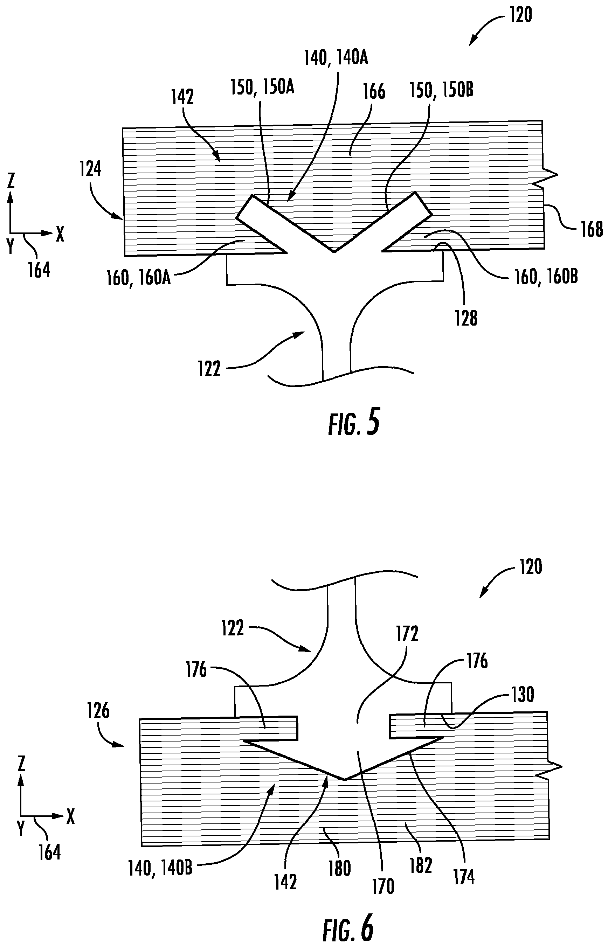

FIG. 5 is an enlarged schematic view of a portion of the CMC component 120 of FIG. 4B including the CMC facesheet 124 and the interlocking elements 140,140A according to some embodiments of the present disclosure. As described above, each of the interlocking elements 140,140A defines one or more protrusions 142 extending from the surface 128 toward the CMC facesheet 124. In the illustrated embodiment, the one or more protrusions 142 define one or more locking elements 150. In exemplary embodiments, the locking elements 150 include a first locking element 150A extending from the surface 128 toward the CMC facesheet 124 in a first direction and a second locking element 150B extending from the surface 128 toward the CMC facesheet 124 in a second direction different than the first direction. In exemplary embodiments, the locking elements 150 are in the form of locking arms extending away from the surface 128 at acute angles with respect to the surface 128 and defining recesses or cavities 160 between the locking elements 150 and the surface 128 such that portions of the CMC facesheet 124 are disposed within the cavities 160. As depicted in FIG. 5, the first and second locking elements 150A, 150B in the form of locking arms extend in different directions with respect to each other so that, together, they form an interlocking structure to mechanically engage the CMC facesheet 124. In the illustrated embodiment, each of the first and second locking elements 150A, 150B define a linear structure disposed at an acute angle with respect to the surface 128 such that respective first and second cavities 160A and 160B are defined between the respective first and second locking elements 150A and 150B and the surface 128. Thus, in exemplary embodiments, the locking elements 150 mechanically engage the CMC facesheet 124 to prevent movement of the CMC facesheet 124 with respect to the ceramic core 122 in at least three directions (e.g., according to the coordinate system 164 depicted in FIG. 5, preventing vertical movement of the CMC facesheet 124 in a direction corresponding to the Z axis away from the ceramic core 122, and preventing lateral movement of the CMC facesheet 124 in directions corresponding to the X and Y axes with respect to the ceramic core 122). Although the locking elements 150 depicted in FIG. 5 are defined as linear structures, it should be understood that the locking elements 150 may have other geometries. Further, although only first and second elements 150A, 150B are depicted in FIG. 5, it should be understood that any number of locking elements 150 may be included, such as first, second, third, fourth, fifth, etc. Additionally, although the locking elements 150 depicted in FIG. 5 are extending in the X and Z axis directions, it should be understood that one or more locking elements may extend in the Y and Z directions, additionally or alternatively, one or more locking elements 150 may extend in each or any combination of the X, Y, and Z axis directions such as, by way of non-limiting example, an inverted cone geometry.

In exemplary embodiments, the ceramic core 122, along with the interlocking elements 140, is fabricated using additive manufacturing techniques, and the ceramic core 122 is densified prior to the formation of the CMC facesheet 124 on the ceramic core 122. The CMC facesheet 124 also includes a CMC fiber preform 166 (e.g., same or similar to the CMC fiber preform 32 of FIGS. 1B-1E, 2A-2E, and 3C-3F) embedded in a ceramic matrix 168 (e.g., same or similar to the ceramic matrix 52 of FIGS. 1D-1E, 2D-2E, and 3E-3F). In exemplary embodiments, the CMC facesheet 124 may be formed onto the surface 128 and the interlocking elements 140 of the ceramic core 122 similar to the embodiments of the CMC component 10 of FIGS. 1A-1E, 2A-2E, and 3A-3F such that the CMC fiber preform 166 of the CMC facesheet 124 and the ceramic core 122, separately or together, may undergo one or more CVI or other processes to form an interface coating, same or similar to the interface coating 42 of FIGS. 1C-1E, 2A-2E, 3A and 3D-3F, on the CMC fiber preform 166 and form the ceramic matrix 168 onto the CMC fiber preform 166. Thus, in exemplary embodiments, the CMC fiber preform 166 may be applied to the surface 128 of the ceramic core 122 in engagement with the one or more interlocking elements 140, and then the ceramic matrix 168 is formed onto the CMC fiber preform 166 such that at least a portion of one or more of the CMC fiber preform 166 and the ceramic matrix 168 are formed around or in engagement with the one or more interlocking elements 140, 140A to secure the CMC facesheet 124 to the ceramic core 122. Thus, in exemplary embodiments, at least a portion of one or more of the CMC fiber preform 166 and the ceramic matrix 168 are located within the respective cavities 160 to restrict movement of the CMC facesheet 124 with respect to the ceramic core 122. Additionally, the ceramic core 122 and the CMC facesheet 124 may undergo thermal processing as depicted and described in connection with FIGS. 1E, 2E, and 3F to form the bonding layer 62 at the interface of the ceramic core 122 with the CMC facesheet 124.

FIG. 6 is an enlarged schematic view of a portion of the CMC component 120 of FIG. 4 including the CMC facesheet 126 and the interlocking elements 140,140B according to some embodiments the present disclosure. As described above, each of the interlocking elements 140,140B defines one or more protrusions 142 extending from the surface 130 toward the CMC facesheet 126. In the illustrated embodiment, the one or more protrusions 142 define one or more locking elements 170. In the illustrated embodiment, each locking element 170 is configured as an arrow-shaped structure including a leg 172 extending from the surface 130 toward the CMC facesheet 126 and one or more extension elements 174 extending outwardly from the leg 172. In the illustrated embodiment, the leg 172 extends in a vertical direction coinciding with the direction of the Z axis of the coordinate system 164, and the one or more extension elements 174 extend laterally from the leg 172 such that at least a portion of the one or more extension elements 174 extend in a direction coinciding with the directions of the X and/or Y axes. In exemplary embodiments, the extension element 174 may be defined having a circular configuration such that the extension element 174 extends in multiple different directions from the leg 172. It should also be understood that the extension element 174 may extend in different angular directions with respect to the leg 172. Additionally, although the locking element 170 is defined as an arrow-shaped structure, it should be understood that the locking element 170 may have other geometries.

In the illustrated embodiment of FIG. 6, the locking element 170 is configured such that the extension elements 174 each define a recess or cavity 176 between the extension element 174 and the surface 130 such that a portion of the CMC facesheet 126 is disposed within the cavity 176 between the extension element 174 and the surface 130 of the ceramic core 122. Thus, in exemplary embodiments, the leg 172 and the extension element 174 mechanically engage the CMC facesheet 126 to prevent movement of the CMC facesheet 126 with respect to the ceramic core 122 in at least three directions (e.g., according to the coordinate system 164 depicted in FIG. 6, preventing vertical movement of the CMC facesheet 126 in a direction corresponding to the Z axis away from the ceramic core 122, and preventing lateral movement of the CMC facesheet 126 in directions corresponding to the X and Y axes with respect to the ceramic core 122).

In exemplary embodiments, the ceramic core 122, along with the interlocking elements 140, is fabricated using additive manufacturing techniques, and the ceramic core 122 is densified prior to the formation of the CMC facesheet 126 on the ceramic core 122. The CMC facesheet 126 also includes a CMC fiber preform 180 (e.g., same or similar to the CMC fiber preform 32 of FIGS. 1B-1E, 2A-2E, and 3C-3F or the CMC fiber preform 166 of FIG. 5) surrounded by a ceramic matrix 182 (e.g., same or similar to the ceramic matrix 52 of FIGS. 1D-1E, 2D-2E, and 3E-3F or the ceramic matrix 168 of FIG. 5). In exemplary embodiments, the CMC facesheet 126 may be formed onto the surface 130 and the interlocking elements 140 of the ceramic core 122 similar to the embodiments of the CMC component 10 of FIGS. 1A-1E, 2A-2E, or 3A-3F such that the CMC fiber preform 180 of the CMC facesheet 126 and the ceramic core 122, separately or together, may undergo one or more CVI or other processes to form an interface coating, same or similar to the interface coating 42 of FIGS. 1C-1E, 2A-2E, 3A and 3D-3F, on the CMC fiber preform 180 and form the ceramic matrix 182 onto the CMC fiber preform 180. Thus, in exemplary embodiments, the CMC fiber preform 180 may be applied to the surface 130 of the ceramic core 122 in engagement with the one or more interlocking elements 140, and then the ceramic matrix 182 formed onto the CMC fiber preform 180 such that a portion of one or more of the CMC fiber preform 180 and the ceramic matrix 182 are formed around or in engagement with the one or more locking elements 170 to secure the CMC facesheet 126 to the ceramic core 122. Thus, in exemplary embodiments, a portion of one or more of the CMC fiber preform 180 and the ceramic matrix 182 are located within the cavities 176 to restrict movement of the CMC facesheet 126 with respect to the ceramic core 122. As described above, the ceramic core 122 and the CMC facesheet 126 may additionally undergo thermal processing as depicted and described in connection with FIGS. 1E, 2E, and 3F to form the bonding layer 62 at the interface of the ceramic core 122 with the CMC facesheet 126. It should also be understood that the features of the CMC component 120 described herein may be used for securing one or more of the CMC facesheet 124 or 126 to any portion of the ceramic core 122 or for wrapping one or more of the CMC facesheet 124 or 126 around or over different surfaces of the ceramic core 122, such as a teardrop-shaped airfoil.

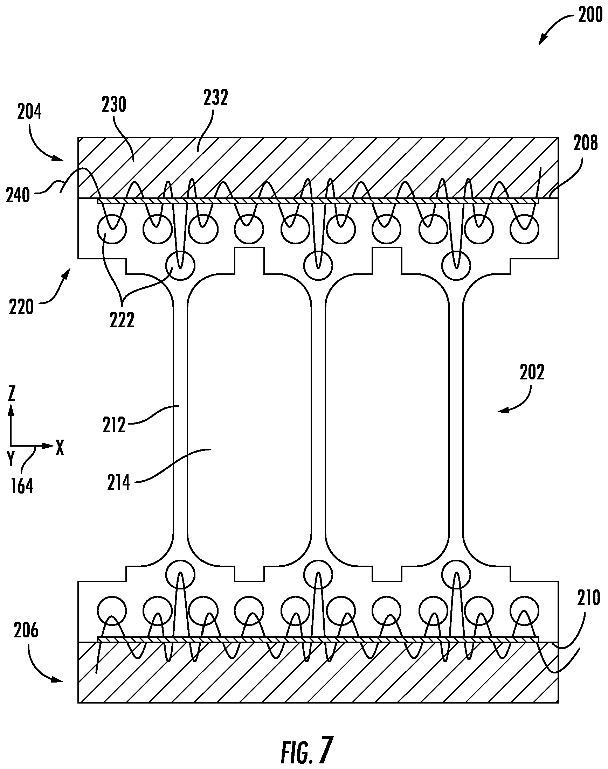

FIG. 7 is a schematic diagram depicting a CMC component 200 and a process for forming the CMC component 200 in accordance with an embodiment of the present disclosure. The CMC component 200 may be similar to the CMC component 10 (FIGS. 1A-1E, 2A-2E, and 3A-3F) or the CMC component 120 (FIGS. 5 and 6) such that the CMC component 200 is a CMC sandwich structure in the form of a ceramic core 202 sandwiched or disposed between a pair of CMC facesheets 204 and 206. In other words, the CMC component 200 includes the ceramic core 202 with a layup or stacked arrangement of one or more CMC plies forming each of the CMC facesheets 204 and 206. Thus, the CMC component 200 is a layered structure formed by bonding or securing the CMC facesheets 204 and 206 to the ceramic core 202.

The ceramic core 202 may be formed similar to the ceramic core 12 (FIGS. 1A-1E, 2B-2E, 3D-3F) or the ceramic core 122 (FIGS. 5 and 6) and may be a monolithic ceramic core, and can be a solid ceramic core or a cellular ceramic core. In exemplary embodiments, the ceramic core 202 is fabricated using additive manufacturing techniques. However, it should also be understood that the ceramic core 202 may be fabricated using other techniques such as, but not limited to, casting, pressing, and injection molding, or a combination thereof. In FIG. 7, the ceramic core 202 comprises a surface 208, a surface 210 opposite the surface 208, and one or more sidewalls 212 extending between the surfaces 208 and 210. The one or more sidewalls 212 define one or more cells 214 between respective sidewalls 212 extending between, or substantially between, the surface 208 and the surface 210 of the ceramic core 202. In exemplary embodiments, the ceramic core 202 is densified prior to the formation, bonding or securing of the CMC facesheets 204 and 206 to the ceramic core 202. Although the present disclosure will be described in connection with securing the CMC facesheet 204 to the surface 208 of the ceramic core 202, it should be understood that the features of the CMC component 200 described herein may be used for securing the CMC facesheet 206 to the surface 210 of the ceramic core 202 or for wrapping the CMC facesheet 204 around or over different surfaces of the ceramic core 202, such as a teardrop-shaped airfoil.

In the illustrated embodiment, the ceramic core 202 includes one or more interlocking elements 220 configured to be in mechanical engagement with the CMC facesheet 204 to secure the CMC facesheet 204 the ceramic core 202. In exemplary embodiments, one or more interlocking elements 220 include one or more apertures 222 positioned in a spaced apart relationship with respect to the surface 208 of the ceramic core 202 such that at least a portion of the ceramic core 202 is disposed between the respective aperture 222 and the surface 208 of the ceramic core 202. In exemplary embodiments, the one or more apertures 222 may be holes, slots, or other types of variable geometry openings that extend through at least a portion of the ceramic core 202 such as, by way of non-limiting example, the sidewall 212 of the ceramic core 202, in a direction such that an axis of the aperture 222 is parallel, or substantially parallel, to the surface 208 of the ceramic core 202. However, it should be understood that the apertures 222 may be configured having other axial orientations so long as at least a portion of the ceramic core 202 is disposed between at least a portion of the aperture 222 and the surface 208 of the ceramic core 202.

In exemplary embodiments, the ceramic core 202, along with the interlocking elements 220, is fabricated using additive manufacturing techniques, and the ceramic core 202 is densified prior to the formation of the CMC facesheet 204 on the ceramic core 202. The CMC facesheet 204 also includes a CMC fiber preform 230 (e.g., same or similar to the CMC fiber preform 32 of FIGS. 1B-1E, 2A-2E, and 3C-3F, the CMC fiber preform 166 of FIG. 5, or the CMC fiber preform 180 of FIG. 6) surrounded by a ceramic matrix 232 (e.g., same or similar to the ceramic matrix 52 of FIGS. 1D-1E, 2D-2E, and 3E-3F, the ceramic matrix 168 of FIG. 5, or the ceramic matrix 182 of FIG. 6). In exemplary embodiments, the CMC facesheet 204 may be formed onto the surface 208 of the ceramic core 202 similar to the embodiments of the CMC component 10 of FIGS. 1A-1E, 2A-2E, or 3A-3F such that the CMC fiber preform 230 of the CMC facesheet 204 and the ceramic core 202, separately or together, may undergo one or more CVI or other processes to form an interface coating, same or similar to the interface coating 42 of FIGS. 1C-1E, 2A-2E, 3A and 3D-3F, on the CMC fiber preform 230 and form the ceramic matrix 232 onto the CMC fiber preform 230. Similar to as described above in connection with the CMC fiber preform 32 (FIGS. 1B-1E, 2A-2E, and 3C-3F), the CMC fiber preform 230 may include one or more CMC filaments or fibers 240 that are woven, braided, or otherwise combined to form at least a portion of the CMC fiber preform 230. In exemplary embodiments, at least one of the CMC fibers 240 is woven or threaded through one or more of the apertures 222 to mechanically secure the CMC facesheet 204 to the ceramic core 202. The CMC fiber 240 may extend from the surface 208 into the cell 214 and be braided or threaded through the one or more of the apertures 222 prior to forming the ceramic matrix 232 onto the CMC fiber preform 230 such that the ceramic matrix 232 secures or bonds portions of the one of more threaded CMC fibers 240 into the ceramic matrix 232 and the CMC facesheet 204. Thus, in exemplary embodiments, the one or more CMC fibers 240 threaded or braided through the one or more apertures 222 extend into the ceramic core 202 to mechanically engage the CMC facesheet 204 to the ceramic core 202 to prevent movement of the CMC facesheet 204 with respect to the ceramic core 202 in at least three directions (e.g., according to the coordinate system 164 depicted in FIG. 7, preventing vertical movement of the CMC facesheet 204 in a direction corresponding to the Z axis away from the ceramic core 202, and preventing lateral movement of the CMC facesheet 204 in directions corresponding to the X and Y axes with respect to the ceramic core 202). Accordingly, at least a portion of the CMC facesheet 204, via the one or more CMC fibers 240 braided or threaded through the one or more apertures 222, extends into the ceramic core 202 to secure the CMC facesheet 204 to the ceramic core 202. Additionally, a ceramic matrix may be formed on CMC fiber preform 230 to form the CMC facesheet 204, such as to the ceramic matrix 52 of FIGS. 1D-1E, 2D-2E, and 3E-3F, the ceramic matrix 168 of FIG. 5, or the ceramic matrix 182 of FIG. 6. The ceramic core 202 and the CMC facesheet 204 may also undergo thermal processing as depicted and described in connection with FIGS. 1E, 2E, and 3F to form the bonding layer 62 at the interface of the ceramic core 202 with the CMC facesheet 204. The one or more CMC fibers 240 that are braided or threaded through the one or more apertures 222 may have an interface coating applied thereto before being woven or braided through the one or more apertures 222, after being woven or braided through the one or more apertures 222, or may not be given an interface coating.

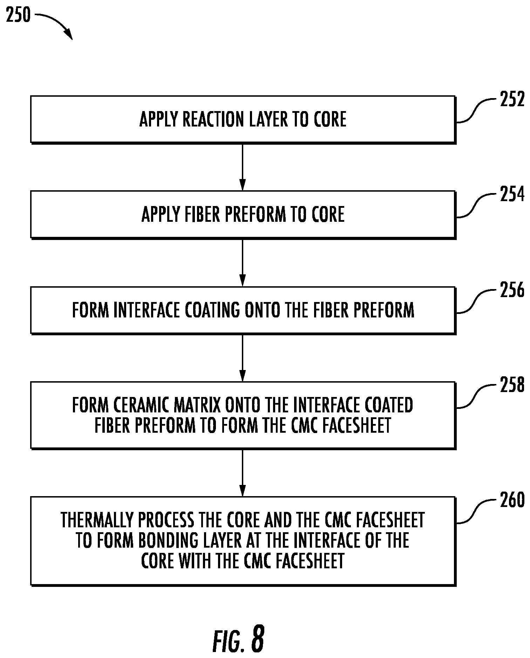

FIG. 8 provides a flow diagram of an exemplary method (250) for bonding a CMC facesheet to a ceramic core in accordance with exemplary embodiments of the present disclosure, and as depicted in FIGS. 1A-1E. It should be appreciated that the method (250) is discussed herein only to describe exemplary aspects of the present subject matter and is not intended to be limiting.

At (252), the method (250) includes applying a reaction layer to a ceramic core, such as the reaction layer 28 depicted at the stage 26 of FIG. 1A. As described above in connection with FIG. 1A, (252) may be optional. In some embodiments, instead of (252), reactive material may be added to the core material, such as through silicon infiltration of the ceramic core. In some embodiments, (252) is omitted when access reactive material is present in the ceramic core. At (254) the method (250) includes applying a CMC fiber preform onto the ceramic core, such as depicted at the stage 30 of FIG. 1B. At (256), the method (250) includes forming an interface coating onto the CMC fiber preform, such as depicted at the stage 40 of FIG. 1C. At (258), the method (250) includes forming a ceramic matrix onto the CMC fiber preform to form the CMC facesheet, such as depicted at the stage 50 of FIG. 1D. At (260), the method (250) includes thermally processing the ceramic core and the CMC facesheet to form a bonding layer bonding the CMC facesheet to the ceramic core, such as depicted at the stage 40 of FIG. 1E. As described above, in exemplary embodiments, the ceramic core and the CMC facesheet are heated at least to a melting temperature of a reactive material, such as contained in the reaction layer 28 (FIGS. 1A-1D) or excess or added silicon from the ceramic core, to react with the interface coating on the CMC fiber preform to bond the ceramic core and the CMC facesheet.

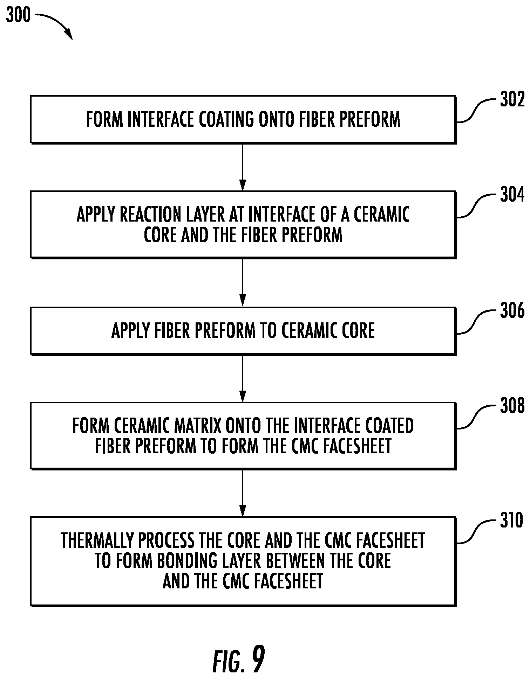

FIG. 9 provides a flow diagram of an exemplary method (300) for bonding a CMC facesheet to a ceramic core in accordance with exemplary embodiments of the present disclosure, and as depicted in FIGS. 2A-2E. It should be appreciated that the method (300) is discussed herein only to describe exemplary aspects of the present subject matter and is not intended to be limiting.

At (302), the method (300) includes forming an interface coating onto a CMC fiber preform, such as depicted at the stage 90 of FIG. 2A. At (304), the method (300) includes applying a reaction layer, such as the reaction layer 28 (FIG. 2B) or additional silicon to either the CMC fiber preform or the ceramic core corresponding to a mating interface of the CMC fiber preform with the ceramic core, such as depicted at the stage 91 of FIG. 2B. It should be understood that (304) is optional as there may be sufficient amounts of excess silicon or other reactive materials in the ceramic core or at or near the interface of the ceramic core with the CMC facesheet such that the application of the reaction layer 28 or additional silicon at the interface between the ceramic core and the CMC fiber preform is unnecessary. In some embodiments, instead of (252), reactive material may be added to the core material, such as through silicon infiltration of the ceramic core. At (306), the method (300) includes applying the CMC fiber preform onto the ceramic core, such as depicted at the stage 92 of FIG. 2C. At (308), the method (300) includes forming a ceramic matrix onto the CMC fiber preform to form the CMC facesheet, such as depicted at the stage 94 of FIG. 2D. At (310), the method (300) includes thermally processing the ceramic core and the CMC facesheet to form a bonding layer bonding the CMC facesheet to the ceramic core, such as depicted at the stage 96 of FIG. 2E. As described above, in exemplary embodiments, the ceramic core and the CMC facesheet are heated at least to a melting temperature of a reactive material, such as contained in the reaction layer 28, and/or excess or added silicon from the ceramic core to form bonding bridges, such as silicon carbide bridges if silicon-containing compounds are used to form the bonding layer.

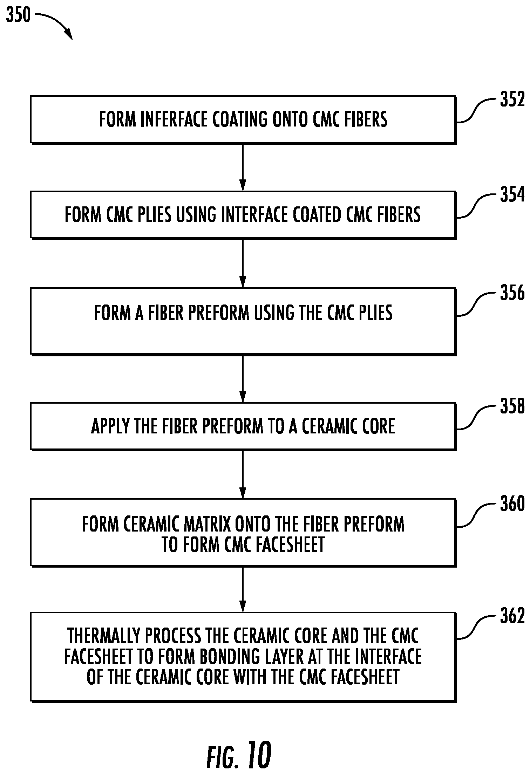

FIG. 10 provides a flow diagram of an exemplary method (350) for bonding a CMC facesheet to a ceramic core in accordance with exemplary embodiments of the present disclosure, and as depicted in FIGS. 3A-3F. It should be appreciated that the method (350) is discussed herein only to describe exemplary aspects of the present subject matter and is not intended to be limiting.

At (352), the method (350) includes forming an interface coating onto one or more CMC filaments or fibers, such as depicted at the stage 100 of FIG. 3A. At (354), the method (350) includes forming one or more CMC plies using the interface coated CMC fibers, such as depicted at the stage 104 of FIG. 3B. At (356), the method (350) includes forming a CMC fiber preform using the CMC plies from (354), such as depicted at the stage 106 of FIG. 3C. At (358), the method (350) includes applying the CMC fiber preform onto a ceramic core, such as depicted at the stage 110 of FIG. 3D. It should also be understood that the method (350) may also include an optional step of adding the reaction layer 28 to the ceramic core, such as set forth at (252) of the method (250) of FIG. 8, before applying the CMC fiber preform to the ceramic core. The ceramic core may alternatively or additionally undergo an additional infiltration or other process to apply or add excess silicon to the ceramic core before applying the CMC fiber preform to the ceramic core. At (360), the method (350) includes forming a ceramic matrix onto the CMC fiber preform to form the CMC facesheet, such as depicted at the stage 112 of FIG. 3E. At (362), the method (350) includes thermally processing the ceramic core and the CMC facesheet to form a bonding layer bonding the CMC facesheet to the ceramic core, such as depicted at the stage 114 of FIG. 3F. As described above, in exemplary embodiments, the ceramic core and the CMC facesheet are heated at least to a melting temperature of a reactive material, such as contained in the reaction layer 28, and/or added or excess silicon from the ceramic core or a silicon layer present at the interface of the ceramic core with the CMC facesheet is used to form the bonding layer, to react with the interface coating on the CMC fiber preform to form the bonding layer between the ceramic core and the CMC facesheet, such as silicon carbide bridges if silicon is used as the reactive compound. As described above, if the reaction layer 28 is used, the ceramic core and the CMC facesheet are heated at least to a reaction temperature of a compound contained in the reaction layer 28 to form the bonding layer.

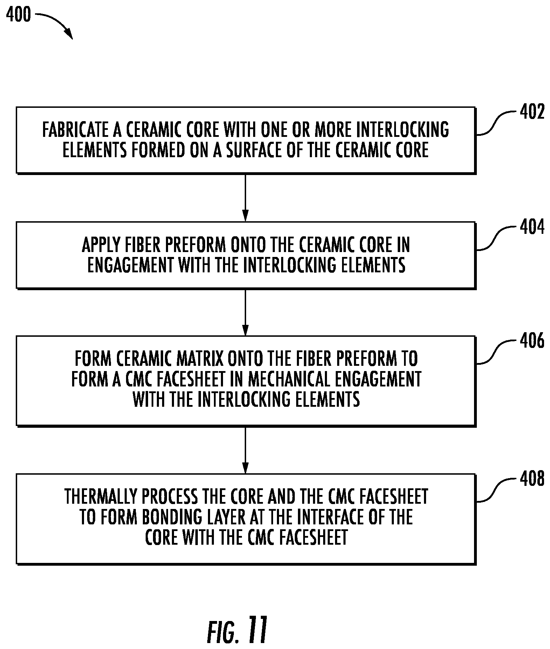

FIG. 11 provides a flow diagram of an exemplary method (400) for securing a CMC facesheet to a ceramic core in accordance with exemplary embodiments of the present disclosure, and as depicted in FIGS. 4A, 4B, 5, and 6. It should be appreciated that the method (400) is discussed herein only to describe exemplary aspects of the present subject matter and is not intended to be limiting.

At (402), the method (400) includes fabricating a ceramic core including one or more interlocking elements formed on or extending from a surface of the ceramic core, such as depicted in FIG. 4A. The one or more interlocking elements may include one or more protrusions extending from the surface of the ceramic core toward a location of a CMC facesheet to mechanically engage or mechanically interlock with the CMC facesheet. At (404), the method (400) includes applying a CMC fiber preform onto the ceramic core and in engagement or contact with the one or more interlocking elements, such as depicted in FIGS. 4B, 5, and 6. The CMC fiber preform may have already been coated with an interface coating or an interface coating may be formed onto the CMC fiber preform after placement of the CMC fiber preform onto the ceramic core, such as the interface coating 42 formed and described in connection with FIGS. 1C-1E, 2A-22E, or 3A-3F. At (406), the method (400) includes forming a ceramic matrix onto the CMC fiber preform to form the CMC facesheet, such as the ceramic matrix 168 described in connection with FIG. 5. The forming of the ceramic matrix onto the CMC fiber preform causes at least a portion of the ceramic matrix to form around the interlocking elements, alone or in combination with at least a portion of the CMC fiber preform, to mechanically secure the CMC facesheet to the ceramic core. The method (400) may also include optional step (408) of thermally processing the ceramic core and the CMC facesheet to form a bonding layer bonding the CMC facesheet to the ceramic core, such as depicted and described in connection with FIGS. 1E, 2E, and 3F. For example, it should be understood that any of the methods depicted and described in connection with FIGS. 1A-1E, 2A-2E, or 3A-3F may be combined with the method (400).

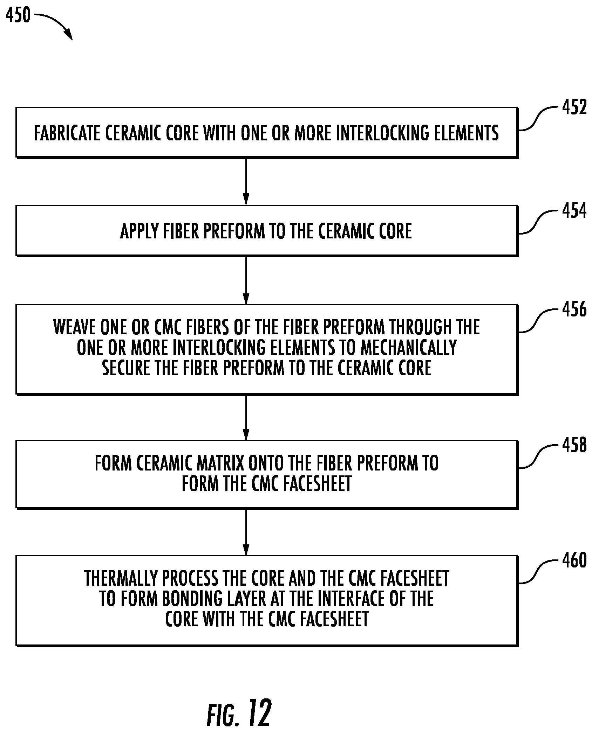

FIG. 12 provides a flow diagram of an exemplary method (450) for securing a CMC facesheet to a ceramic core in accordance with exemplary embodiments of the present disclosure, and as depicted in FIG. 7. It should be appreciated that the method (450) is discussed herein only to describe exemplary aspects of the present subject matter and is not intended to be limiting.

At (452), the method (450) includes fabricating a ceramic core including one or more interlocking elements disposed in a spaced apart relationship with respect to a surface of the ceramic core. The one or more interlocking elements may include one or more apertures such that at least a portion of the ceramic core is between at least a portion of the aperture and the surface of the ceramic core corresponding to the intended position CMC facesheet. At (454), the method (450) includes applying the CMC fiber preform onto the ceramic core. At (456), the method (450) includes weaving one or more CMC filaments or fibers of the CMC fiber preform through the one or more apertures to mechanically secure the CMC fiber preform to the ceramic core. The CMC fiber preform may have already been coated with an interface coating prior to applying the CMC fiber preform onto the ceramic core or weaving the one or more CMC fibers through the apertures, or the interface coating may be formed onto the CMC fiber preform after (454) and (456), such as the interface coating 42 formed and described in connection with FIGS. 1C-1E, 2A-22E, or 3A-3F. At (458), the method (450) includes forming a ceramic matrix onto the CMC fiber preform to form the CMC facesheet, such as the ceramic matrix 182 described in connection with FIG. 6. The forming of the ceramic matrix onto the CMC fiber preform causes at least a portion of the CMC fiber weaved through the apertures to be bonded to or form part of the CMC facesheet and secure the CMC facesheet to the ceramic core. The method (450) may also include optional step (460) of thermally processing the ceramic core and the CMC facesheet to form a bonding layer bonding the CMC facesheet to the ceramic core, such as depicted and described in connection with FIGS. 1E, 2E, and 3F. For example, it should be understood that any of the methods depicted and described in connection with FIGS. 1A-1E, 2A-2E, or 3A-3F may be combined with the method (450).

Thus, embodiments of the present disclosure provide a method and technique for bonding or securing a CMC facesheet to a ceramic core that addresses a potentially weak bond that may otherwise result from an interface coating applied to fibers of the CMC facesheet. In exemplary embodiments, the method includes using excess silicon from the ceramic core or additional silicon or reactive elements and compound constituents located or applied at the interface of the ceramic core and the CMC layers to create a strong bond of the CMC facesheet to the ceramic core. The excess silicon or the reactive intermetallic materials such as silicides and boride constituents react with the interface coating deposited onto the CMC fibers to create bridges, such as SiC bridges based on a reaction between the silicon and the carbon of the interface coating, between the CMC facesheet and the ceramic core. Embodiments of the present disclosure effectively utilize the carbon or boron nitride contained within the interface coating or the interfacial regions of the ceramic core or their proximities to turn a potentially weak bond between the ceramic core and the CMC facesheet to a strong bond.

Additionally, embodiments of the present disclosure provide a method and techniques for securing the CMC layers to the ceramic core using one or more interlocking elements formed on or in the ceramic core. In exemplary embodiments, the ceramic core is fabricated to include one or more interlocking elements that mechanically engage or interlock with at least a portion of the CMC layer. In exemplary embodiments, the CMC layer may be formed in situ onto the interlocking elements. In exemplary embodiments, one or more of the CMC fibers of the CMC layers may be woven into the interlocking elements and the CMC layer formed onto the ceramic core. Thus, despite having a relatively weak interface coating present on the CMC fibers of the CMC layer, embodiments of the present disclosure securely bond the CMC layer to the ceramic core. It should be understood that any of the various methods or techniques disclosed herein may be combined to secure the CMC layer to the core structure. For example, exemplary embodiments may combine a SiC bonding layer with a mechanical engagement via interlocking elements to secure the CMC layer to the core structure.

Further aspects are provided by the subject matter of the following clauses:

A method for forming a ceramic matrix composite ("CMC") component, the method comprising: applying a CMC fiber preform to a ceramic core, the CMC fiber preform being formed from a plurality of CMC fiber tows; forming an interface coating on at least a portion of the CMC fiber tows before or after the CMC fiber preform is formed from the plurality of CMC fiber tows; forming a ceramic matrix on the CMC fiber preform with the CMC fiber preform applied to the ceramic core, wherein the CMC fiber preform and the ceramic matrix form a CMC facesheet, and wherein a reaction material is located at or adjacent an interface of the CMC facesheet and the ceramic core; and thermally processing the CMC facesheet and the ceramic core to react the interface coating with the reaction material to form a bonding layer at the interface.

The method of the preceding clause, wherein forming the interface coating on at least a portion of the CMC fiber tows is performed after forming the CMC fiber preform and after applying the CMC fiber preform to the ceramic core.

The method of any preceding clause, wherein forming the interface coating on at least a portion of the CMC fiber tows is performed after forming the CMC fiber preform and before applying the CMC fiber preform to the ceramic core.

The method of any preceding clause, wherein forming the interface coating on at least a portion of the plurality of CMC fiber tows is performed prior to forming the CMC fiber preform, and wherein the method further comprises forming the CMC fiber preform from the plurality of CMC fiber tows having the interface coating formed on at least a portion thereof prior to applying the CMC fiber preform to the ceramic core.

The method of any preceding clause, wherein forming the CMC fiber preform comprises weaving or braiding together the plurality of CMC fiber tows.

The method of any preceding clause, wherein forming the interface coating comprises depositing at least one of a carbon interface coating or a boron nitride interface coating on at least a portion of the CMC fiber tows.

The method of any preceding clause, wherein at least one of forming the interface coating or forming the ceramic matrix comprises performing a chemical vapor infiltration (CVI) process.

The method of any preceding clause, further comprising applying a reaction layer of at least one of silicon, a silicon-containing compound, an intermetallic silicide compound, or a boride-containing compound at the interface before applying the CMC fiber preform to the ceramic core to provide the reaction material located at the interface.

The method of any preceding clause, wherein the reaction material located at or adjacent the interface further includes silicon present in the ceramic core.

The method of any preceding clause, wherein the reaction material located at or adjacent the interface includes silicon present in the ceramic core, and wherein thermally processing the CMC facesheet and the ceramic core causes the silicon from the ceramic core to react with the interface coating to form the bonding layer.

The method of any preceding clause, wherein the reaction material located at or adjacent the interface comprises silicon, and wherein thermally processing the CMC facesheet and the ceramic core comprises heating to at least a melting temperature of the silicon, and wherein the bonding layer formed at the interface comprises silicon carbide (SiC).

The method of any preceding clause, wherein applying the CMC fiber preform to the ceramic core comprises applying the CMC fiber preform to at least one of a solid ceramic core or a cellular ceramic core.

The method of any preceding clause, wherein applying the CMC fiber preform to the ceramic core comprises applying at least one of a woven fabric preform or a braided fabric preform to the ceramic core.

A method for forming a ceramic matrix composite ("CMC") component, the method comprising: applying a reaction layer on a ceramic core, the reaction layer comprising silicon in the form of elemental silicon, a silicon-containing compound, or an intermetallic silicide; applying a CMC fiber preform on the reaction layer, the CMC fiber preform comprising a plurality of CMC fiber tows; forming an interface coating on at least a portion of the CMC fiber tows either prior to applying the CMC fiber preform on the reaction layer, or after applying the CMC fiber preform on the reaction layer; forming a ceramic matrix on the CMC fiber preform after the CMC fiber preform is applied to the reaction layer, wherein the CMC fiber preform and the ceramic matrix form a CMC facesheet; and thermally processing the CMC facesheet and the ceramic core to react the interface coating with the silicon in the reaction layer to form a silicon carbide (SiC) bonding layer between the CMC facesheet and the ceramic core.

The method of any preceding clause, wherein forming the interface coating comprises forming the interface coating on at least a portion of the plurality of CMC fiber tows, and wherein the method further comprises forming the CMC fiber preform from the plurality of CMC fiber tows having the interface coating formed on at least a portion thereof prior to applying the CMC fiber preform on the reaction layer.

The method of any preceding clause, wherein forming the interface coating on at least a portion of the CMC fiber tows is performed by depositing the coating onto the CMC fiber preform after applying the CMC fiber preform to the ceramic core.

The method of any preceding clause, wherein forming the interface coating on at least a portion of the CMC fiber tows is performed by depositing the coating onto the CMC fiber preform before applying the CMC fiber preform to the ceramic core.

A method for forming a ceramic matrix composite ("CMC") component, the method comprising: applying a CMC fiber preform to a ceramic core, the CMC fiber preform comprising a plurality of CMC fiber tows, and the ceramic core comprising an excess of silicon; forming an interface coating on at least a portion of the CMC fiber tows either prior to applying the CMC fiber preform to the ceramic core, or after applying the CMC fiber preform to the ceramic core; forming a ceramic matrix on the CMC fiber preform after the CMC fiber preform is applied to the ceramic core, wherein the CMC fiber preform and the ceramic matrix form a CMC facesheet; and thermally processing the CMC facesheet and the ceramic core to react the interface coating with the excess silicon to form a silicon carbide (SiC) bonding layer at the interface.

The method of any preceding clause, wherein forming the interface coating comprises forming the interface coating on at least a portion of the plurality of CMC fiber tows, and wherein the method further comprises forming the CMC fiber preform from the plurality of CMC fiber tows having the interface coating formed on at least a portion thereof prior to applying the CMC fiber preform to the ceramic core.

The method of any preceding clause, wherein forming the interface coating on at least a portion of the CMC fiber tows is performed by depositing the coating onto the CMC fiber preform either before or after applying the CMC fiber preform to the ceramic core.

A method for forming a ceramic matrix composite ("CMC") component, the method comprising: applying a CMC fiber preform to a ceramic core; performing one or more processes to: form an interface coating to at least the CMC fiber preform; and form a ceramic matrix to the CMC fiber preform with the CMC fiber preform applied to the ceramic core, wherein the CMC fiber preform and the ceramic matrix form a CMC facesheet; and thermally processing the CMC facesheet and the ceramic core to react the interface coating with at least a portion of silicon located at an interface of the CMC facesheet and the ceramic core to form a bonding layer at the interface.

The method of the preceding clause, wherein forming the interface coating comprises forming at least one of a carbon interface coating or a boron nitride interface coating to at least the CMC fiber preform.

The method of any preceding clause, further comprising applying at least one of a silicon, silicon-containing, intermetallic silicide, or boride-containing layer at the interface before applying the CMC fiber preform to the ceramic core.

The method of any preceding clause, wherein applying the CMC fiber preform to the ceramic core comprises applying the CMC fiber preform to at least one of a solid ceramic core or a cellular ceramic core.

The method of any preceding clause, wherein thermally processing the CMC facesheet and the ceramic core comprises thermally processing the CMC facesheet and the ceramic core to at least a melting temperature of the silicon.

The method of any preceding clause, further comprising performing at least one process of the one or more processes to deposit the interface coating to the CMC fiber preform before applying the CMC fiber preform to the ceramic core.

The method of any preceding clause, wherein applying the CMC fiber preform to the ceramic core comprises applying at least one of a woven fabric preform or a braided fabric preform to the ceramic core.

The method of any preceding clause, wherein performing the one or more processes comprises performing at least one chemical vapor infiltration (CVI) process.

The method of any preceding clause, wherein thermally processing the CMC facesheet and the ceramic core comprises forming the bonding layer comprising silicon carbide (SiC).

The method of any preceding clause, wherein applying the CMC fiber preform to the ceramic core comprises applying the CMC fiber preform to a honeycomb ceramic core.

The method of any preceding clause, wherein applying the CMC fiber preform to the ceramic core comprises applying at least one of a woven fabric CMC preform or a braided fabric CMC preform to the ceramic core.

The method of any preceding clause, wherein the CMC fiber preform comprises one or more CMC fiber tows, and further comprising: performing the one or more processes to deposit the interface coating to the one or more fiber tows; and weaving or braiding the one or more fiber tows with the interface coating to form the CMC fiber preform.

The method of any preceding clause, further comprising additively manufacturing the ceramic core.

The method of any preceding clause, further comprising densifying the ceramic core prior to the formation and bonding of the CMC facesheet to the ceramic core.

A method for forming a ceramic matrix composite ("CMC") component, the method comprising: forming a reaction layer containing a reactive material on a surface of a ceramic core; applying a CMC fiber preform to the ceramic core, the CMC fiber preform comprising an interface coating; forming a ceramic matrix onto the CMC fiber preform with the CMC fiber preform applied to the ceramic core, wherein the CMC fiber preform and the ceramic matrix form a CMC facesheet; and thermally processing the CMC facesheet and the ceramic core to cause the reactive material to react with the interface coating to form a bonding layer at the interface.

A ceramic matrix composite ("CMC") component, comprising: a ceramic core comprising one or more interlocking elements; and a CMC facesheet positioned against a surface of the ceramic core, the CMC facesheet in mechanical engagement with the one or more interlocking elements to secure the CMC facesheet to the ceramic core, wherein at least a portion of CMC facesheet is disposed between at least one interlocking element of the one or more interlocking elements and the surface.

The CMC component of any preceding clause, wherein the one or more interlocking elements comprise one or more protrusions extending from the surface.

The CMC component of any preceding clause, wherein the one or more protrusions each comprise at least one locking element, and wherein the portion of the CMC facesheet is disposed between the at least one locking element and the surface.

The CMC component of any preceding clause, wherein the ceramic core comprises an additively manufactured ceramic core.

The CMC component of any preceding clause, wherein the CMC facesheet comprises a CMC fiber preform comprising an interface coating, and further comprising a bonding layer disposed at an interface of the CMC facesheet and the ceramic core, the bonding layer formed by a reaction between the interface coating and a reaction material disposed at the interface.

The CMC component of any preceding clause, wherein the one or more interlocking elements comprise one or more apertures formed in the ceramic core.

The CMC component of any preceding clause, wherein the one or more apertures are positioned spaced apart from the surface.

The CMC component of any preceding clause, wherein the CMC facesheet comprises one or more reinforcing fibers disposed within a ceramic matrix, and wherein at least one reinforcing fiber of the one or more reinforcing fibers is woven through the one or more apertures.

A method for forming a ceramic matrix composite ("CMC") component, the method comprising: forming one or more interlocking elements in a ceramic core; and forming a CMC facesheet against a surface of the ceramic core that engages the one or more interlocking elements to secure the CMC facesheet to the ceramic core, wherein at least a portion of the CMC facesheet is disposed between at least one interlocking element of the one or more interlocking elements and the surface.

The method of any preceding clause, wherein forming the one or more interlocking elements comprises forming one or more apertures in the ceramic core.

The method of any preceding clause, wherein the CMC facesheet comprises one or more reinforcing fibers disposed within a ceramic matrix, and further comprising weaving at least one reinforcing fiber of the one or more reinforcing fibers through the one or more apertures.

The method of any preceding clause, wherein forming the CMC facesheet comprises: forming, after the weaving, the ceramic matrix onto the one or more reinforcing fibers.

The method of any preceding clause, wherein forming the one or more interlocking elements comprises forming one or more protrusions extending from the surface of the ceramic core.

The method of any preceding clause, further comprising forming the one or more protrusions each comprising at least one locking element, and wherein forming the CMC facesheet comprises forming the CMC facesheet such that the portion is disposed between the at least one locking element and the surface.

The method of any preceding clause, further comprising forming the at least one locking element extending away from the surface at an acute angle with respect to the surface.

The method of any preceding clause, wherein forming the CMC facesheet comprises: applying a CMC fiber preform to the surface of the ceramic core; and forming a ceramic matrix onto the CMC fiber preform, wherein at least a portion of the ceramic matrix engages the one or more interlocking elements.

The method of any preceding clause, further comprising additively manufacturing the ceramic core, and wherein forming the one or more interlocking elements comprises forming the one or more interlocking elements while additively manufacturing the ceramic core.

The method of any preceding clause, wherein the CMC facesheet comprises a CMC fiber preform comprising an interface coating, and wherein a reaction material is located at or adjacent an interface of the CMC facesheet and the ceramic core, the method further comprising thermally processing the CMC facesheet and the ceramic core to react the interface coating with the reaction material to form a bonding layer at the interface.

A method for forming a ceramic matrix composite ("CMC") component, the method comprising: additively manufacturing a ceramic core to include one or more interlocking elements; applying a CMC fiber preform to a surface of the ceramic core; and forming a ceramic matrix onto the CMC fiber preform, wherein the ceramic matrix and the CMC fiber preform form a CMC facesheet, and wherein at least a portion of the CMC facesheet is disposed between at least one locking element of the one or more locking elements and the surface.

The method of any preceding clause, wherein additively manufacturing the ceramic core to include the one or more interlocking elements comprises additively manufacturing the ceramic core to include one or more apertures, and further comprising weaving at least one reinforcing fiber of the CMC fiber preform through the one or more apertures.

A ceramic matrix composite ("CMC") component, comprising: a ceramic core comprising one or more interlocking elements; and a CMC facesheet positioned against a surface of the ceramic core, wherein the one or more interlocking elements are spaced apart from the surface, and wherein the CMC facesheet is in mechanical engagement with the one or more interlocking elements to secure the CMC facesheet to the ceramic core.

The CMC component of any preceding clause, wherein the one or more interlocking elements comprise one or more apertures extending through at least one sidewall of the ceramic core.

A method for forming a ceramic matrix composite ("CMC") component, the method comprising: forming a ceramic core having a first surface and second surface, wherein the second surface is spaced apart from the first surface, and wherein the ceramic core comprises one or more interlocking elements disposed spaced apart from at least the first surface; and forming a CMC facesheet against a surface of the ceramic core that engages the one or more interlocking elements to secure the CMC facesheet to the ceramic core, wherein the CMC facesheet comprises one or more reinforcing fibers disposed within a ceramic matrix, and wherein at least one reinforcing fiber of the one or more reinforcing fibers is woven at least one interlocking element of the one or more interlocking elements.

This written description uses examples to disclose the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for forming a ceramic matrix composite (CMC) component (10, 120, 200), the method comprising:
applying a CMC fiber preform (32, 166, 180, 230) to a ceramic core (12, 122, 202), the CMC fiber preform (32, 166, 180, 230) being formed from a plurality of CMC fiber tows (34, 240);
forming an interface coating (42) on at least a portion of the CMC fiber tows (34, 240) before or after the CMC fiber preform (32, 166, 180, 230) is formed from the plurality of CMC fiber tows (34, 240);
forming a ceramic matrix (52, 168, 182, 232) on the CMC fiber preform (32, 166, 180, 230) with the CMC fiber preform applied to the ceramic core (12, 122, 202), wherein the CMC fiber preform (32, 166, 180, 230) and the ceramic matrix (52, 168, 182, 232) form a CMC facesheet (14, 124, 126, 204); and
thermally processing the CMC facesheet (14, 124, 126, 204) and the ceramic core (12, 122, 202) to react the interface coating (42) with a reaction material located at or adjacent an interface of the CMC facesheet (14, 124, 126, 204) and the ceramic core (12, 122, 202) to form a bonding layer (62) at the interface.

2. The method of claim 1, wherein forming the interface coating (42) is performed after forming the CMC fiber preform (32, 166, 180, 230) and after applying the CMC fiber preform to the ceramic core (12, 122, 202).

3. The method of claim 1 or 2, wherein forming the interface coating (42) is performed after forming the CMC fiber preform (32, 166, 180, 230) and before applying the CMC fiber preform to the ceramic core (12, 122, 202).

4. The method of any preceding claim, wherein forming the interface coating (42) on at least a portion of the plurality of CMC fiber tows (34, 240) is performed prior to forming the CMC fiber preform (32, 166, 180, 230), and wherein the method further comprises forming the CMC fiber preform from the plurality of CMC fiber tows having the interface coating (42) formed on at least a portion thereof prior to applying the CMC fiber preform to the ceramic core (12, 122, 202).

5. The method of any preceding claim, wherein forming the CMC fiber preform (32, 166, 180, 230) comprises weaving or braiding together the plurality of CMC fiber tows (34, 240).

6. The method of any preceding claim, wherein forming the interface coating (42) comprises depositing at least one of a carbon interface coating or a boron nitride interface coating on at least a portion of the CMC fiber tows (34, 240).

7. The method of any preceding claim, wherein at least one of forming the interface coating (42) or forming the ceramic matrix (52, 168, 182, 232) comprises performing a chemical vapour infiltration (CVI) process.

8. The method of any preceding claim, further comprising applying a reaction layer (28) of at least one of silicon, a silicon-containing compound, an intermetallic silicide compound, or a boride-containing compound at the interface before applying the CMC fiber preform (32, 166, 180, 230) to the ceramic core (12, 122, 202) to provide the reaction material.

9. The method of claim 8, wherein the reaction material located at or adjacent the interface further includes silicon present in the ceramic core (12, 122, 202).

10. The method of any preceding claim, wherein the reaction material comprises silicon, and wherein thermally processing the CMC facesheet (14, 124, 126, 204) and the ceramic core (12, 122, 202) comprises heating to at least a melting temperature of the silicon, and wherein the bonding layer (62) formed at the interface comprises silicon carbide (SiC).

11. The method of any preceding claim, wherein applying the CMC fiber preform (32, 166, 180, 230) to the ceramic core (12, 122, 202) comprises applying the CMC fiber preform to at least one of a solid ceramic core or a cellular ceramic core.

12. The method of any preceding claim, wherein the ceramic core (12, 122, 202) comprises one or more interlocking elements (140, 170, 220) configured to mechanically engage the CMC facesheet (14, 124, 126, 204).

13. The method of claim 12, wherein the one or more interlocking elements (140, 170, 220) comprise one or more apertures (222) through which at least one reinforcing fiber (240) of the CMC fiber preform (230) is woven to mechanically secure the CMC facesheet (204) to the ceramic core (202).

14. The method of claim 12 or 13, wherein the one or more interlocking elements (140, 170) comprise one or more protrusions (142) extending from the ceramic core surface (128, 130) and defining cavities (160, 176) in which at least a portion of the ceramic matrix (168, 182) or the CMC fiber preform (166, 180) is disposed.

15. The method of any preceding claim, wherein the ceramic core (12, 122, 202) is additively manufactured and densified prior to forming the CMC facesheet (14, 124, 126, 204).
